# EUROPÄISCHE PATENTSCHRIFT

(11) **EP 3 033 273 B1**
(45) Veröffentlichungstag und Bekanntmachung des Hinweises auf die Patenterteilung: **30.10.2019**
(21) Anmeldenummer: 14753033.1
(22) Anmeldetag: 05.08.2014
(51) Int. Cl.: B64D 11/06, B60N 2/02, H01R 12/73, H01R 12/75, H01R 12/70, B64D 11/00

(54) **FLUGZEUGSITZSTEUEREINHEIT**
AIRCRAFT SEAT CONTROL UNIT
UNITÉ DE COMMANDE DE SIÈGE D'AÉRONEF

(30) Priorität: 14.08.2013 DE 102013108781
(43) Veröffentlichungstag der Anmeldung: 22.06.2016
(73) Patentinhaber: Recaro Aircraft Seating GmbH & Co. KG, 74523 Schwäbisch Hall (DE)
(72) Erfinder: PHILIPP, Adrian, 74544 Michelbach a.d. Bilz (DE); GERNGROSS, Michael, 74523 Michelfeld (DE); STRECKERT, Michael, 74523 Schwäbisch Hall (DE); MEHMEL, Jürgen, 74523 Schwäbisch Hall (DE); LAUBENBERGER, Jörg, 71540 Murrhardt (DE)
(74) Vertreter: Daub, Thomas
(86) Internationale Anmeldenummer: PCT/EP2014/066837
(87) Internationale Veröffentlichungsnummer: WO 2015/022238

(56) Entgegenhaltungen:
- DE-A1- 10 115 523
- DE-A1-102004 012 249
- DE-A1-102007 006 033
- US-A1- 2003 071 504
- US-A1- 2011 282 495

## Beschreibung

### Stand der Technik

Die Erfindung betrifft einen Flugzeugsitz mit einer Flugzeugsitzsteuereinheit nach dem Oberbegriff des Patentanspruchs 1.

Es ist bereits eine Flugzeugsitzsteuereinheit für einen Flugzeugsitz, die zumindest zur teilweisen Steuerung des Flugzeugsitzes vorgesehen ist, mit zumindest einer Schaltkreisvorrichtung, die zumindest einen Schnittstellenschaltkreis und zumindest einen Funktionsschaltkreis aufweist, vorgeschlagen worden.

Solche Flugzeugsitzsteuereinheiten sind zum Beispiel aus den Dokumenten DE 2004012249 A1, US 2011 /282495 A1, DE 102007006033 A1, DE 10115523 A1 und US 2003/071504 A1 bekannt.

Die Aufgabe der Erfindung besteht insbesondere darin, einen Flugzeugsitz mit verbesserten Eigenschaften hinsichtlich Flexibilität und Austauschbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung-wie in Anspruch 1 definiert-geht aus von einem Flugzeugsitz mit einer Flugzeugsitzsteuereinheit die zumindest zur teilweisen Steuerung des Flugzeugsitzes vorgesehen ist, mit zumindest einer Schaltkreisvorrichtung, die zumindest einen Schnittstellenschaltkreis und zumindest einen Funktionsschaltkreis aufweist.

Es wird unter Anderem vorgeschlagen, dass die Flugzeugsitzsteuereinheit zumindest eine erste Platine, die den Schnittstellenschaltkreis aufweist, und zumindest eine zweite Platine aufweist, die den Funktionsschaltkreis aufweist, wobei die erste Platine und die zweite Platine miteinander gekoppelt sind. Unter einem "Flugzeugsitz" soll dabei insbesondere ein Sitz, insbesondere ein Fluggastsitz, verstanden werden, der in einer Flugzeugkabine angeordnet ist und dabei vorzugsweise auf einem Kabinenboden der Flugzeugkabine aufgeständert ist. Unter einer "Steuerung des Flugzeugsitzes" soll insbesondere eine Ansteuerung und Betätigung von elektrischen und/oder elektronischen Komponenten des Flugzeugsitzes, wie beispielsweise Aktuatoren, Bildschirmen oder anderen, dem Fachmann als sinnvoll erscheinenden Komponenten, verstanden werden. Unter einer "zumindest teilweisen Steuerung" soll dabei insbesondere verstanden werden, dass die Flugzeugsitzsteuereinheit wenigstens einen Teil, vorzugsweise mehr als die Hälfte und in einer besonders vorteilhaften Ausgestaltung alle elektrischen und/oder elektronischen Komponenten des Flugzeugsitzes ansteuert. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Schaltkreisvorrichtung" soll dabei insbesondere eine Vorrichtung verstanden werden, die zumindest einen elektrischen und/oder elektronischen Schaltkreis aufweist, wobei jeder Schaltkreis der Schaltkreisvorrichtung vorzugsweise eine spezielle Funktionalität aufweist, wobei es grundsätzlich auch möglich ist, dass eine Funktionalität auf mehrere Schaltkreise verteilt ist. Unter einem "Schnittstellenschaltkreis" soll dabei insbesondere ein Schaltkreis verstanden werden, der eine Energieversorgung der Schaltkreisvorrichtung, vorzugsweise eine Infrastruktur für eine Kommunikation zwischen verschiedenen mit dem Schnittstellenschaltkreis gekoppelten Schaltkreisen und dem Schnittstellenschaltkreis selbst, sowie eine Kommunikationsschnittstelle zu einer übergeordneten Steuereinheit, wie beispielsweise einer Flugzeugsteuereinheit, bereitstellt. Unter einem "Funktionsschaltkreis" soll dabei insbesondere ein Schaltkreis verstanden werden, der zur Steuerung einer bestimmten Funktion oder eines bestimmten Funktionsspektrums vorgesehen ist. Darunter, dass die "erste Platine den Schnittstellenschaltkreis aufweist", soll dabei insbesondere verstanden werden, dass der Schnittstellenschaltkreis mit seinen elektrischen und/oder elektronischen Bauteilen physikalisch auf der ersten Platine angeordnet ist. Darunter, dass die "zweite Platine den Funktionsschaltkreis aufweist", soll dabei insbesondere verstanden werden, dass der Funktionsschaltkreis mit seinen elektrischen und/oder elektronischen Bauteilen physikalisch auf der ersten Platine angeordnet ist. Darunter, dass die "erste Platine und die zweite Platine miteinander gekoppelt sind", soll dabei insbesondere verstanden werden, dass die erste Platine und die zweite Platine physikalisch miteinander verbunden sind, wobei auf der jeweiligen Platine angeordnete Schaltkreise über elektrische Kontakte miteinander verbunden sind, wodurch ein Austausch von elektrischen und/oder elektronischen Signalen zwischen den Schaltkreisen der miteinander gekoppelten Platinen stattfinden kann. Durch eine erfindungsgemäße Ausgestaltung können verschiedene Funktionen der Flugzeugsitzsteuereinheit durch Aufteilung von Schaltkreisen auf verschiedene Platinen vorteilhaft voneinander getrennt werden, wodurch die Flugzeugsitzsteuereinheit besonders vorteilhaft flexibel ausgestaltet wird, da verschiedene Funktionen durch einfaches Austauschen einer Platine ersetzt und ausgetauscht werden können.

Zudem wird vorgeschlagen, dass die erste Platine zumindest einen Steckadapter aufweist, der zur Anbindung der zumindest einen zweiten Platine vorgesehen ist. Unter einem "Steckadapter" soll dabei insbesondere ein Element verstanden werden, das elektrische Kontakte bereitstellt, um einen Schaltkreis, den die Platine aufweist, über einen weiteren Steckadapter und/oder ein Kabel elektrisch und/oder elektronisch mit einem Schaltkreis einer anderen Platine und/oder anderen elektrischen und/oder elektronischen Bauteilen zu koppeln. Dabei sind die elektrischen Kontakte des Steckadapters in den Schnittstellenschaltkreis der ersten Platine integriert und sind dadurch elektrisch mit dem Schnittstellenschaltkreis verbunden. Unter "zur Anbindung der zumindest einen zweiten Platine vorgesehen" soll dabei insbesondere verstanden werden, dass über den Steckadapter der ersten Platine die zweite Platine elektrisch mit der ersten Platine verbindbar ist. Dadurch kann die erste Platine besonders vorteilhaft zur einfachen Anbindung der zweiten Platine ausgebildet werden.

Weiterhin wird vorgeschlagen, dass die Flugzeugsitzsteuereinheit zumindest eine weitere Platine aufweist, die den Funktionsschaltkreis aufweist und zur Anbindung an der ersten Platine vorgesehen ist. Dadurch können vorteilhaft mehrere Platinen, vorzugsweise mehrere als Sekundärplatinen ausgebildete Platinen, mit der ersten Platine gekoppelt werden, wodurch insbesondere eine Flugzeugsitzsteuereinheit mit einem großen und vorteilhaften Funktionsumfang bereitgestellt werden kann.

Es wird weiter vorgeschlagen, dass die erste Platine zumindest einen weiteren Steckadapter aufweist, der zur Anbindung der weiteren Platine vorgesehen ist. Dadurch kann eine weitere Platine vorteilhaft einfach, schnell und einfach austauschbar mit der ersten Platine gekoppelt werden.

Zudem wird vorgeschlagen, dass die einen Funktionsschaltkreis aufweisende Platine einen Steckadapter aufweist, der äquivalent zu den Steckadaptern der ersten Platine ausgebildet ist. Unter einem "äquivalent ausgebildeten Steckadapter" soll dabei insbesondere ein Steckadapter verstanden werden, der korrespondierend zu dem anderen Steckadapter ausgebildet ist, wobei die beiden Steckadapter zu einer Verbindung miteinander vorgesehen sind, wobei sich elektrische Kontakte der Steckadapter kontaktieren und so eine elektrische Verbindung zwischen den elektrischen Kontakten des einen Steckadapters und den entsprechenden elektrischen Kontakten des anderen äquivalent ausgebildeten Steckadapters hergestellt ist. Dadurch kann die den Funktionsschaltkreis aufweisende Platine vorteilhaft mit der ersten Platine gekoppelt werden und so kann der Funktionsschaltkreis in die Schaltkreisvorrichtung integriert werden.

Es wird weiterhin vorgeschlagen, dass der Schnittstellenschaltkreis zur Kommunikation der Schaltkreisvorrichtung mit einer Flugzeugsteuereinheit vorgesehen ist. Unter einer "Flugzeugsteuereinheit" soll dabei insbesondere eine übergeordnete Steuereinheit des Flugzeugs verstanden werden, die insbesondere mehrere Flugzeugsitzsteuereinheiten verschiedener Flugzeugsitze ansteuert und diesen übergeordnet ist. Dabei ist es denkbar, dass ein Flugzeug mehrere Flugzeugsteuereinheiten aufweist und/oder, dass eine Flugzeugsteuereinheit lediglich eine Steuereinheit zur Kommunikation von Flugzeugsitzsteuereinheiten untereinander darstellt. Dadurch kann eine Kommunikation der Flugzeugsitzsteuereinheit mit einer Steuereinheit des Flugzeugs vorteilhaft stattfinden.

Weiter wird vorgeschlagen, dass der Funktionsschaltkreis als ein Serviceschaltkreis ausgebildet ist. Unter einem "Serviceschaltkreis" soll dabei insbesondere ein Schaltkreis verstanden werden, über den ein Benutzer auf die Flugzeugsitzsteuereinheit zugreifen kann, wobei in den Serviceschaltkreis dazu vorzugsweise ein Adapter integriert ist, über den der Benutzer auf den Serviceschaltkreis und damit auf die Flugzeugsitzsteuereinheit zugreifen kann. Dabei ist der Adapter, über den der Benutzer auf den Serviceschaltkreis zugreifen kann, vorzugsweise als ein Steckerelement ausgebildet, an den der Benutzer ein externes Gerät anschließen kann. Grundsätzlich ist es auch denkbar, dass der Adapter als ein Übertragungsmodul ausgebildet ist, über das ein Benutzer drahtlos auf den Serviceschaltkreis zugreifen kann, wie beispielsweise ein Bluetooth-Adapter. Dadurch kann der Funktionsschaltkreis besonders vorteilhaft für einen Zugriff durch einen Bediener ausgebildet werden, wodurch der Bediener einfach und vorteilhaft auf die Flugzeugsitzsteuereinheit zugreifen kann.

Es wird ferner vorgeschlagen, dass der Funktionsschaltkreis als ein Sitzplatzsteuerungsschaltkreis ausgebildet ist. Unter einem "Sitzplatzsteuerungsschaltkreis" soll dabei insbesondere ein Schaltkreis verstanden werden, der zur Steuerung von verschiedenen Bauteilen des Flugzeugsitzes vorgesehen ist und beispielsweise verschiedene Aktuatoren des Flugzeugsitzes, einen Bildschirm, und/oder andere elektrische und/oder elektronische Bauteile des Flugzeugsitzes ansteuert. Dadurch kann der Funktionsschaltkreis besonders vorteilhaft für eine Steuerung des Flugzeugsitzes ausgebildet werden.

Weiterhin wird vorgeschlagen, dass der Funktionsschaltkreis als ein Lichtsteuerschaltkreis ausgebildet ist. Unter einem "Lichtsteuerschaltkreis" soll dabei insbesondere ein Schaltkreis verstanden werden, der zur Steuerung eines Lichts oder einer Vorrichtung aus verschiedenen Lichtern an und um den Flugzeugsitz herum vorgesehen ist. Dadurch kann der Funktionsschaltkreis besonders vorteilhaft für eine Steuerung einer Lichtanlage an dem Flugzeugsitz und/oder um den Flugzeugsitz herum ausgebildet werden.

Des Weiteren wird vorgeschlagen, dass der Funktionsschaltkreis als ein Sensor- und/oder Aktuatorschnittstellenschaltkreis ausgebildet ist. Unter einem "Sensor- und/oder Aktuatorschnittstellenschaltkreis" soll dabei insbesondere ein Schaltkreis verstanden werden, der zur Anbindung von Sensoren und Aktuatoren an die Flugzeugsitzsteuereinheit vorgesehen ist. Dabei sind in den Sensor- und/oder Aktuatorschnittstellenschaltkreis vorzugsweise ein oder mehrere Steckerelemente integriert, über die externe Sensoren und/oder Aktuatoren des Flugzeugsitzes an den Sensor- und/oder Aktuatorschnittstellenschaltkreis gekoppelt werden können. Dadurch kann der Funktionsschaltkreis vorteilhaft zur Anbindung von Sensoren und/oder Aktuatoren eines Flugzeugsitzes an die Flugzeugsitzsteuereinheit ausgebildet werden.

Zudem wird vorgeschlagen, dass die zweite Platine und/oder die weitere Platine jeweils ein Steckerelement aufweisen, das zur Anbindung einer externen Elektronik an die Schaltkreisvorrichtung vorgesehen ist. Unter einer "externen Elektronik" sollen dabei insbesondere elektrische und/oder elektronische Bauteile oder Vorrichtungen verstanden werden, wie beispielsweise ein externer Computer, wie insbesondere ein Diagnosegerät, ein oder mehrere Aktuatoren oder ein oder mehrere Sensoren. Es ist dabei denkbar, dass die externe Elektronik beispielsweise auch als eine in den Flugzeugsitz integrierte Massagevorrichtung, eine Luftkissenvorrichtung, eine Heizvorrichtung und/oder eine andere, dem Fachmann als sinnvoll erscheinende Vorrichtung zur Verstellung des Flugzeugsitzes und/oder zur Erhöhung eines Komforts ausgebildet ist. Dabei ist es denkbar, dass an das Steckerelement beispielsweise ein Kabelbaum angeschlossen ist, über den mehrere externe Geräte anschließbar sind. Dadurch können externe Elektronikbauteile, die von der Schaltkreisvorrichtung gesteuert werden und/oder Signale an die Schaltkreisvorrichtung senden, besonders einfach an die Schaltkreisvorrichtung angebunden werden.

Es wird weiter vorgeschlagen, dass die erste Platine einen Hauptstecker umfasst, der zur Anbindung der Schaltkreisvorrichtung an eine Flugzeugelektronik vorgesehen ist. Unter einer "Flugzeugelektronik" soll dabei insbesondere eine Elektronik des Flugzeugs verstanden werden, in dem der Flugzeugsitz mit der Flugzeugsitzsteuereinheit angeordnet ist, wobei die Flugzeugelektronik aus einer Stromversorgung des Flugzeugs und/oder einer übergeordneten Flugzeugsteuereinheit ausgebildet sein kann. Dadurch kann die Schaltkreisvorrichtung besonders einfach und vorteilhaft mit einer Flugzeugelektronik verbunden werden.

Ferner wird vorgeschlagen, dass der Schnittstellenschaltkreis zur Energieversorgung der Schaltkreisvorrichtung und zur Kommunikation zwischen den Funktionsschaltkreisen vorgesehen ist. Unter "zur Energieversorgung vorgesehen" soll dabei insbesondere verstanden werden, dass der Schnittstellenschaltkreis an eine elektrische Stromquelle ankoppelbar ist, über die der Schnittstellenschaltkreis die Flugzeugsitzsteuereinheit, also den Schnittstellenschaltkreis selbst, und alle anderen an den Schnittstellenschaltkreis angebundenen Funktionsschaltkreise mit einem elektrischen Strom versorgt. Unter einer "Kommunikation" soll dabei insbesondere ein Austausch von elektrischen oder elektronischen Signalen verstanden werden. Dadurch können an den Schnittstellenschaltkreis angeschlossene Funktionsschaltkreise vorteilhaft einfach miteinander kommunizieren und werden einfach und vorteilhaft mit einer elektrischen Energie versorgt.

Weiter wird vorgeschlagen, dass die erste Platine als eine Hauptplatine und die zweite Platine als eine Sekundärplatine ausgebildet ist. Unter einer "Hauptplatine" soll dabei insbesondere eine zentrale Platine der Flugzeugsitzsteuereinheit verstanden werden, mit der andere Platinen, die an die Flugzeugsitzsteuereinheit angeschlossen sind, gekoppelt sind. Unter einer "Sekundärplatine" soll dabei insbesondere eine Platine verstanden werden, die zur Anbindung an die Flugzeugsitzsteuereinheit mit der Hauptplatine gekoppelt ist. Dadurch können die erste Platine und die zweite Platine besonders vorteilhaft ausgebildet werden.

Die erfindungsgemäße Flugzeugsitzsteuereinheit soll hierbei nicht auf die oben beschriebene Anwendung und Ausführungsform beschränkt sein. Insbesondere kann die erfindungsgemäße Flugzeugsitzsteuereinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Flugzeugsitzes mit einer erfindungsgemäßen Flugzeugsitzsteuereinheit,
- Fig. 2: eine schematische Darstellung der erfindungsgemäßen Flugzeugsitzsteuereinheit,
- Fig. 3: eine schematische Darstellung einer ersten Platine der Flugzeugsitzsteuereinheit und
- Fig. 4: eine schematische Darstellung der ersten Platine mit einer zweiten Platine der erfindungsgemäßen Flugzeugsitzsteuereinheit.

### Beschreibung des Ausführungsbeispiels

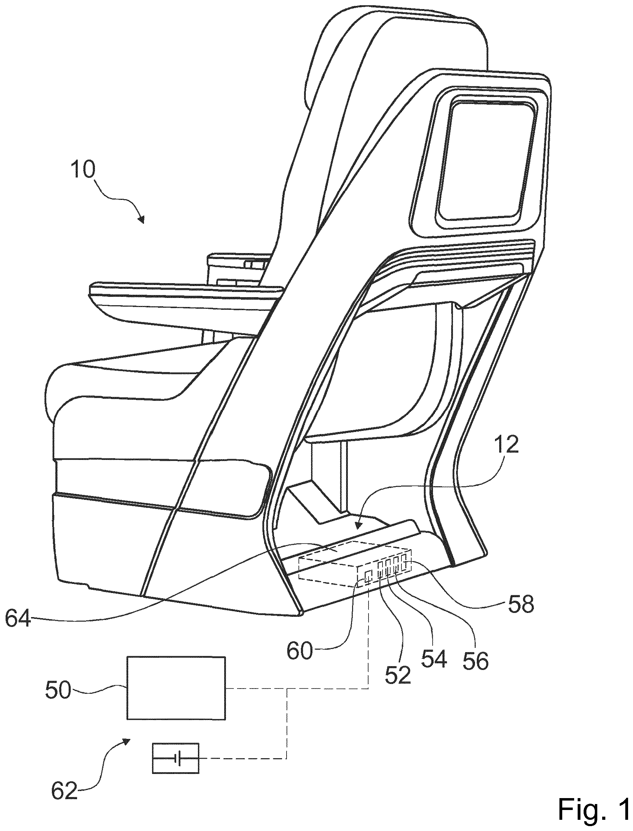

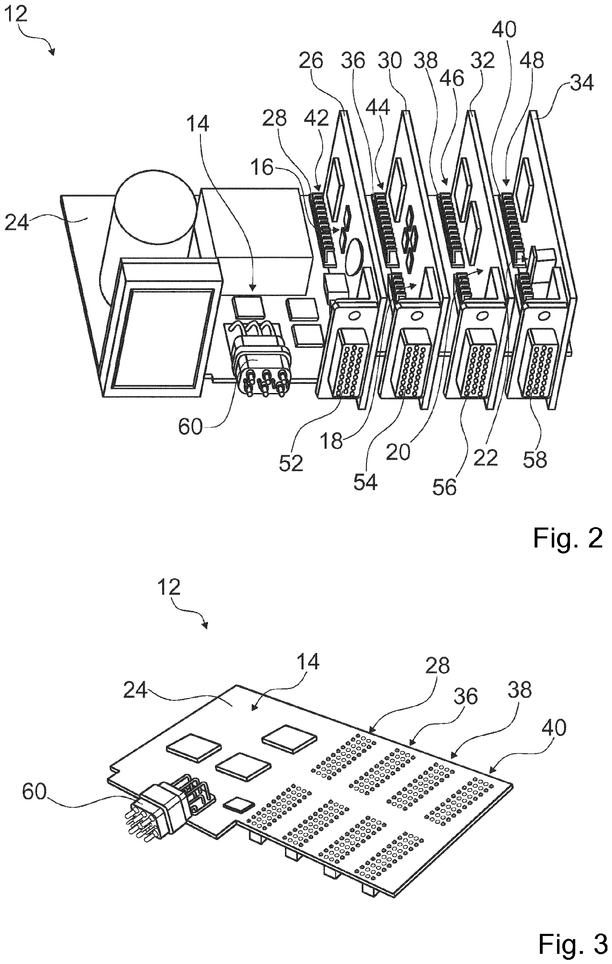

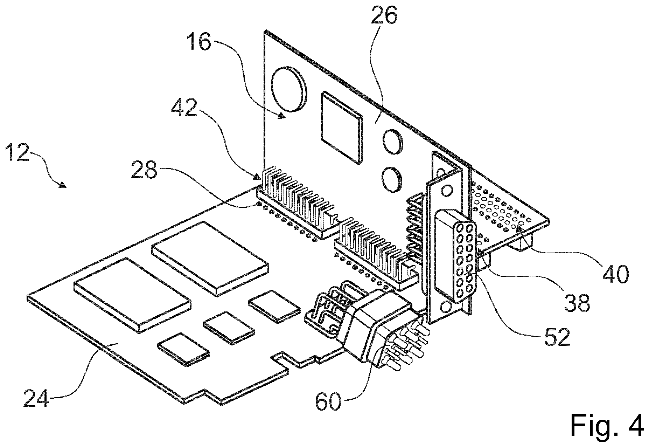

In den Figuren 1 bis 4 ist eine erfindungsgemäße Flugzeugsitzsteuereinheit für einen Flugzeugsitz 10 dargestellt. Figur 1 zeigt schematisch einen Flugzeugsitz 10. Der in Figur 1 dargestellte Flugzeugsitz 10 soll hierbei nur schematisch und als ein Beispiel für einen Flugzeugsitz dargestellt sein. Dabei ist es grundsätzlich auch denkbar, dass der Flugzeugsitz 10 eine andere, dem Fachmann als sinnvoll erscheinende Ausgestaltung aufweist. Der Flugzeugsitz 10 ist als ein Business- oder First-Class-Flugzeugsitz ausgebildet. Grundsätzlich ist es natürlich auch denkbar, dass der Flugzeugsitz 10 als ein Economy-Class-Flugzeugsitz ausgebildet ist. Der Flugzeugsitz 10 ist in einem nicht näher dargestellten Flugzeug aufgeständert. Dazu weist der Flugzeugsitz 10 eine Aufständereinheit auf, mittels der der Flugzeugsitz 10 fest mit einem Kabinenboden des Flugzeugs verbunden ist. Das Flugzeug umfasst eine Flugzeugelektronik 62. Die Flugzeugelektronik 62 umfasst eine generelle Stromversorgung von elektrischen und/oder elektronischen Komponenten des Flugzeugs. Das Flugzeug umfasst weiter eine Flugzeugsteuereinheit 50, die zur Steuerung der verschiedenen elektrischen und/oder elektronischen Komponenten in dem Flugzeug und speziell in der Flugzeugkabine, in der der Flugzeugsitz 10 angeordnet ist, vorgesehen ist.

Die Flugzeugsitzsteuereinheit ist zur Steuerung des Flugzeugsitzes 10 vorgesehen. Dazu umfasst die Flugzeugsitzsteuereinheit eine Schaltkreisvorrichtung 12. Die Schaltkreisvorrichtung 12 umfasst einen Schnittstellenschaltkreis 14 und vier Funktionsschaltkreise 16, 18, 20, 22. Grundsätzlich ist es auch denkbar, dass die Schaltkreisvorrichtung 12 eine andere Anzahl von Funktionsschaltkreisen 16, 18, 20, 22 aufweist. Die hier genannten vier Funktionsschaltkreise 16, 18, 20, 22 sollen hierbei nur beispielhaft für eine Ausgestaltung der Schaltkreisvorrichtung 12 der Flugzeugsitzsteuereinheit angesehen werden. Der Schnittstellenschaltkreis 14 ist zur Versorgung der Schaltkreisvorrichtung 12 mit elektrischer Energie vorgesehen. Außerdem läuft eine Kommunikation innerhalb der Schaltkreisvorrichtung 12, insbesondere zwischen den Funktionsschaltkreisen 16, 18, 20, 22 über den Schnittstellenschaltkreis 14. Die Flugzeugsitzsteuereinheit weist ein Gehäuse 64 auf. Das Gehäuse 64 schließt die Flugzeugsitzsteuereinheit nach außen hin ab. Über das Gehäuse 64 ist die Flugzeugsitzsteuereinheit in dem Flugzeugsitz 10 befestigt.

Die Flugzeugsitzsteuereinheit umfasst eine erste Platine 24. Die erste Platine 24 ist dabei als eine Hauptplatine ausgebildet. Die erste Platine 24 weist dabei den Schnittstellenschaltkreis 14 der Schaltkreisvorrichtung 12 auf. Auf der ersten Platine 24 sind Leiterbahnen und nicht näher beschriebene elektrische und/oder elektronische Bauteile angeordnet, die den Schnittstellenschaltkreis 14 ausbilden. Der Schnittstellenschaltkreis 14 ist zur Energieversorgung der Schaltkreisvorrichtung 12 vorgesehen. Über den Schnittstellenschaltkreis 14 wird also eine elektrische Energie in die Schaltkreisvorrichtung 12 eingeleitet. Der Schnittstellenschaltkreis 14 ist zur Kommunikation zwischen den Funktionsschaltkreisen 16, 18, 20, 22 vorgesehen. Die Funktionsschaltkreise 16, 18, 20, 22 der Schaltkreisvorrichtung 12 sind über den Schnittstellenschaltkreis 14 miteinander gekoppelt. Daten, die zwischen den Funktionsschaltkreisen 16, 18, 20, 22 ausgetauscht werden, werden dabei über den Schnittstellenschaltkreis 14 geleitet und dabei eventuell verarbeitet und moduliert. Des Weiteren ist der Schnittstellenschaltkreis 14 zur Kommunikation der Schaltkreisvorrichtung 12 mit der Flugzeugsteuereinheit 50 vorgesehen. Ein Austausch von Daten und Signalen zwischen der Flugzeugsteuereinheit 50 und den Funktionsschaltkreisen 16, 18, 20, 22 erfolgt über den Schnittstellenschaltkreis 14. Dabei werden die von der Flugzeugsteuereinheit 50 an die Schaltkreisvorrichtung 12 gesendeten Daten und Signale von dem Schnittstellenschaltkreis 14 verarbeitet und gegebenenfalls an die entsprechenden Funktionsschaltkreise 16, 18, 20, 22 weitergeleitet. Grundsätzlich ist es auch denkbar, dass der Schnittstellenschaltkreis 14 die von der Flugzeugsteuereinheit 50 gesendeten Signale und Daten verarbeitet, ein Ausgangssignal für eine bestimmte Aktion berechnet und dieses dann an den entsprechenden Funktionsschaltkreis 16, 18, 20, 22 weiterleitet. Zur Anbindung der Schaltkreisvorrichtung 12 umfasst die erste Platine 24, die den Schnittstellenschaltkreis 14 ausbildet, einen Hauptstecker 60. Der Hauptstecker 60 ist dazu vorgesehen, mit einer Verkabelung des Flugzeugs gekoppelt zu werden, um so die Flugzeugsitzsteuereinheit mit ihrer Schaltkreisvorrichtung 12 mit der Flugzeugelektronik 62 zu koppeln. Dazu ist der Hauptstecker 60 in den Schnittstellenschaltkreis 14 der Schaltkreisvorrichtung 12 integriert. Über den Hauptstecker 60 und ein daran angeschlossenes Kabel erfolgt eine Kommunikation mit der Flugzeugelektronik 62. Des Weiteren wird die Schaltkreisvorrichtung 12 über den Hauptstecker 60 mit elektrischer Energie versorgt.

Die Flugzeugsitzsteuereinheit umfasst eine zweite Platine 26. Die zweite Platine 26 ist als eine Sekundärplatine ausgebildet. Die zweite Platine 26 ist zu einer Kopplung mit der ersten Platine 24 vorgesehen. Dabei weist die zweite Platine 26 den ersten Funktionsschaltkreis 16 auf. Auf der zweiten Platine 26 sind Leiterbahnen und nicht näher beschriebene elektrische und/oder elektronische Bauteile angeordnet, die den ersten Funktionsschaltkreis 16 ausbilden. Der erste Funktionsschaltkreis 16, den die zweite Platine 26 aufweist, ist als ein Sitzplatzsteuerungsschaltkreis ausgebildet. Der Sitzplatzsteuerungsschaltkreis ist dazu vorgesehen, eine Steuerung des Flugzeugsitzes 10 zu übernehmen. Der als Sitzplatzsteuerungsschaltkreis ausgebildete erste Funktionsschaltkreis 16 berechnet dabei abhängig von verschiedenen Eingangssignalen eine Steuerung des Flugzeugsitzes 10. In einem montierten Zustand, in dem der auf der zweiten Platine 26 aufgebrachte erste Funktionsschaltkreis 16 in die Schaltkreisvorrichtung 12 integriert ist, ist die zweite Platine 26 mit der ersten Platine 24, die den Schnittstellenschaltkreis 14 aufweist, gekoppelt.

Zur Kopplung mit der ersten Platine 24 umfasst die zweite Platine 26 einen Steckadapter 42. Der Steckadapter 42 ist zur Kopplung der zweiten Platine 26 an die erste Platine 24 vorgesehen. Über den Steckadapter 42 ist die zweite Platine 26, die den ersten Funktionsschaltkreis 16 aufweist, mit der ersten Platine 24, die den Schnittstellenschaltkreis 14 aufweist, gekoppelt. Dabei ist der Steckadapter 42 der zweiten Platine 26 in den ersten Funktionsschaltkreis 16 integriert und weist elektrische Kontaktstellen auf, die elektrisch mit dem ersten Funktionsschaltkreis 16 verbunden sind und über die der erste Funktionsschaltkreis 16 mit mit dem Steckadapter 42 verbundenen Elementen elektrisch gekoppelt werden kann. Zur Anbindung einer externen Elektronik an die Schaltkreisvorrichtung 12 umfasst die zweite Platine 26 ein Steckerelement 52. Das Steckerelement 52 ist in den ersten Funktionsschaltkreis 16 integriert und umfasst elektrische Kontaktstellen. Das Steckerelement 52 erstreckt sich bis aus dem Gehäuse 64 heraus, wodurch an die geschlossene Flugzeugsitzsteuereinheit externe Elektronik an das Steckerelement 52 anschließbar ist. An das Steckerelement 52 der zweiten Platine 26, die den ersten Funktionsschaltkreis 16 aufweist, der als Sitzplatzsteuerungsschaltkreis ausgebildet ist, sind Peripheriegeräte, wie beispielsweise ein Bildschirm und Bedienelemente des Flugzeugsitzes 10, an den ersten Funktionsschaltkreis 16 und damit an die Schaltkreisvorrichtung 12 angebunden.

Die Flugzeugsitzsteuereinheit umfasst eine weitere, dritte Platine 30. Die dritte Platine 30 ist als eine Sekundärplatine ausgebildet. Die dritte Platine 30 ist zu einer Kopplung mit der ersten Platine 24 vorgesehen. Dabei weist die dritte Platine 30 den zweiten Funktionsschaltkreis 18 auf. Auf der dritten Platine 30 sind Leiterbahnen und nicht näher beschriebene elektrische und/oder elektronische Bauteile angeordnet, die den zweiten Funktionsschaltkreis 18 ausbilden. Der zweite Funktionsschaltkreis 18, den die dritte Platine 30 aufweist, ist als ein Lichtsteuerschaltkreis ausgebildet. Der als Lichtsteuerschaltkreis ausgebildete zweite Funktionsschaltkreis 18 ist zur Ansteuerung von Lichtelementen an und um den Flugzeugsitz 10 herum vorgesehen. In einem montierten Zustand, in dem der auf der dritten Platine 30 aufgebrachte zweite Funktionsschaltkreis 18 in die Schaltkreisvorrichtung 12 integriert ist, ist die dritte Platine 30 mit der ersten Platine 24, die den Schnittstellenschaltkreis 14 aufweist, gekoppelt. Zur Kopplung mit der ersten Platine 24 umfasst die dritte Platine 30 einen Steckadapter 44. Der Steckadapter 44 ist zur Kopplung der dritten Platine 30 an die erste Platine 24 vorgesehen. Über den Steckadapter 44 ist die dritte Platine 30, die den zweiten Funktionsschaltkreis 18 aufweist, mit der ersten Platine 24, die den Schnittstellenschaltkreis 14 aufweist, gekoppelt. Dabei ist der Steckadapter 44 der dritten Platine 30 in den zweiten Funktionsschaltkreis 18 integriert und weist elektrische Kontaktstellen auf, die elektrisch mit dem zweiten Funktionsschaltkreis 18 verbunden sind und über die der zweite Funktionsschaltkreis 18 mit mit dem Steckadapter 44 verbundenen Elementen elektrisch gekoppelt werden kann. Zur Anbindung einer externen Elektronik an die Schaltkreisvorrichtung 12 umfasst die dritte Platine 30 ein Steckerelement 54. Das Steckerelement 54 ist in den zweiten Funktionsschaltkreis 18 integriert und umfasst elektrische Kontaktstellen. Das Steckerelement 54 erstreckt sich bis aus dem Gehäuse 64 der Flugzeugsitzsteuereinheit heraus, wodurch an die geschlossene Flugzeugsitzsteuereinheit externe Elektronik an das Steckerelement 54 anschließbar ist. An das Steckerelement 54 der dritten Platine 30, die den zweiten Funktionsschaltkreis 18 aufweist, der als Lichtsteuerschaltkreis ausgebildet ist, sind die Lichtelemente des Flugzeugsitzes angebunden. Grundsätzlich ist es auch denkbar, dass auch andere Lichtelemente über das Steckerelement 54 an den zweiten Funktionsschaltkreis 18 und die dritte Platine 30 angebunden sind.

Die Flugzeugsitzsteuereinheit umfasst eine weitere, vierte Platine 32. Die vierte Platine 32 ist als eine Sekundärplatine ausgebildet. Die vierte Platine 32 ist zu einer Kopplung mit der ersten Platine 24 vorgesehen. Dabei weist die vierte Platine 32 den dritten Funktionsschaltkreis 20 auf. Auf der vierten Platine 32 sind Leiterbahnen und nicht näher beschriebene elektrische und/oder elektronische Bauteile angeordnet, die den dritten Funktionsschaltkreis 20 ausbilden. Der dritte Funktionsschaltkreis 20, den die vierte Platine 32 aufweist, ist als ein Sensor- und/oder Aktuatorschnittstellenschaltkreis ausgebildet. Der dritte, als Sensor- und/oder Aktuatorschnittstellenschaltkreis ausgebildete Funktionsschaltkreis 20 ist zur Ansteuerung von Aktuatoren des Flugzeugsitzes und zur Verarbeitung und Auswertung von Sensorsignalen, die von Sensoren des Flugzeugsitzes bereitgestellt werden, vorgesehen. Dabei steuert der dritte, als Sensor- und/oder Aktuatorschnittstellenschaltkreis ausgebildete Funktionsschaltkreis 20 Aktuatoren des Flugzeugsitzes 10 aufgrund von Eingaben eines Bedieners oder aufgrund von ausgewerteten Sensorsignalen an. Außerdem verarbeitet und wertet der dritte, als Sensor- und/oder Aktuatorschnittstellenschaltkreis ausgebildete Funktionsschaltkreis 20 von Sensoren des Flugzeugsitzes 10 ausgegebene Sensorsignale aus und gibt entsprechende Ausgangssignale aus. In einem montierten Zustand, in dem der auf der vierten Platine 32 aufgebrachte dritte Funktionsschaltkreis 20 in die Schaltkreisvorrichtung 12 integriert ist, ist die vierte Platine 32 mit der ersten Platine 24, die den Schnittstellenschaltkreis 14 aufweist, gekoppelt. Zur Kopplung mit der ersten Platine 24 umfasst die vierte Platine 32 einen Steckadapter 46. Der Steckadapter 46 ist zur Kopplung der vierten Platine 32 an die erste Platine 24 vorgesehen. Über den Steckadapter 46 ist die vierte Platine 32, die den dritten Funktionsschaltkreis 20 aufweist, mit der ersten Platine 24, die den Schnittstellenschaltkreis 14 aufweist, gekoppelt. Dabei ist der Steckadapter 46 der vierten Platine 32 in den dritten Funktionsschaltkreis 20 integriert und weist elektrische Kontaktstellen auf, die elektrisch mit dem dritten Funktionsschaltkreis 20 verbunden sind und über die der dritte Funktionsschaltkreis 20 mit mit dem Steckadapter 46 verbundenen Elementen elektrisch gekoppelt werden kann. Zur Anbindung einer externen Elektronik an die Schaltkreisvorrichtung 12 umfasst die vierte Platine 32 ein Steckerelement 56. Das Steckerelement 56 ist in den dritten Funktionsschaltkreis 20 integriert und umfasst elektrische Kontaktstellen. Das Steckerelement 56 erstreckt sich bis aus dem Gehäuse 64 der Flugzeugsitzsteuereinheit heraus, wodurch an die geschlossene Flugzeugsitzsteuereinheit externe Elektronik an das Steckerelement 56 anschließbar ist. An das Steckerelement 56 der vierten Platine 32, die den dritten Funktionsschaltkreis 20 aufweist, der als Sensor- und/oder Aktuatorschnitt-stellenschaltkreis ausgebildet ist, sind Aktuatoren und Sensoren des Flugzeugsitzes 10 angebunden.

Die Flugzeugsitzsteuereinheit umfasst eine weitere, fünfte Platine 34. Die fünfte Platine 34 ist als eine Sekundärplatine ausgebildet. Die fünfte Platine 34 ist zu einer Kopplung mit der ersten Platine 24 vorgesehen. Dabei weist die fünfte Platine 34 den vierten Funktionsschaltkreis 22 auf. Auf der fünften Platine 34 sind Leiterbahnen und nicht näher beschriebene elektrische und/oder elektronische Bauteile angeordnet, die den vierten Funktionsschaltkreis 22 ausbilden. Der vierte Funktionsschaltkreis 22, den die fünfte Platine 34 aufweist, ist als ein Serviceschaltkreis ausgebildet. Der vierte, als Serviceschaltkreis ausgebildete vierte Funktionsschaltkreis 22 ist zur Kommunikation der Schaltkreisvorrichtung 12 mit einem Diagnosegerät vorgesehen. Über den Serviceschaltkreis kann ein Diagnosegerät an die Flugzeugsitzsteuereinheit angeschlossen werden und so können beispielsweise Daten aus der Flugzeugsitzsteuereinheit ausgelesen oder aufgespielt werden. Die fünfte Platine 34 umfasst einen Steckadapter 48. Der Steckadapter 48 ist zur Kopplung der fünften Platine 34 an die erste Platine 24 vorgesehen. Über den Steckadapter 48 ist die fünfte Platine 34, die den vierten Funktionsschaltkreis 22 aufweist, mit der ersten Platine 24, die den Schnittstellenschaltkreis 14 aufweist, gekoppelt. Dabei ist der Steckadapter 48 der fünften Platine 34 in den vierten Funktionsschaltkreis 22 integriert und weist elektrische Kontaktstellen auf, die elektrisch mit dem vierten Funktionsschaltkreis 22 verbunden sind und über die der vierte Funktionsschaltkreis 22 mit mit dem Steckadapter 48 verbundenen Elementen elektrisch gekoppelt werden kann. Zur Anbindung einer externen Elektronik an die Schaltkreisvorrichtung 12 umfasst die fünfte Platine 34 ein Steckerelement 58. Das Steckerelement 58 ist in den vierten Funktionsschaltkreis 22 integriert und umfasst elektrische Kontaktstellen. Das Steckerelement 58 erstreckt sich bis aus dem Gehäuse 64 der Flugzeugsitzsteuereinheit heraus, wodurch an die geschlossene Flugzeugsitzsteuereinheit externe Elektronik an das Steckerelement 58 anschließbar ist. An das Steckerelement 58 der fünften Platine 34, die den vierten Funktionsschaltkreis 22 aufweist, der als Serviceschaltkreis ausgebildet ist, kann ein Diagnosegerät oder ein externer Computer angebunden werden.

Zur Anbindung der als Sekundärplatinen ausgebildeten Platinen weist die erste Platine 24 vier Steckadapter 28, 36, 38, 40 auf. Die Steckadapter 42, 44, 46, 48 der Platinen 26, 30, 32, 34, die jeweils einen Funktionsschaltkreis 16, 18, 20, 22 aufweisen, sind dabei äquivalent zu den Steckadaptern 28, 36, 38, 40 der ersten Platine 24 ausgebildet. Die vier Steckadapter 28, 36, 38, 40 der ersten Platine 24 sind in den Schnittstellenschaltkreis 14 integriert. Dabei weisen die vier Steckadapter 28, 36, 38, 40 jeweils elektrische Kontaktstellen auf, die mit dem Schnittstellenschaltkreis 14 elektrisch verbunden sind. Die vier Steckadapter 28, 36, 38, 40 der ersten Platine 24 sind alle gleich ausgebildet. Grundsätzlich wäre es auch denkbar, dass die Steckadapter 28, 36, 38, 40 der ersten Platine 24 teilweise unterschiedliche Ausgestaltungen aufweisen, sodass nur Platinen 26, 30, 32, 34 mit einem bestimmten Funktionsschaltkreis 16, 18, 20, 22, die dann einen dementsprechend ausgebildeten Steckadapter 42, 44, 46, 48 aufweisen würden, an einen bestimmten Steckadapter 28, 36, 38, 40 der ersten Platine 24 angebracht werden können. Da die Steckadapter 28, 36, 38, 40 der ersten Platine 24 alle gleich ausgebildet sind, ist eine Anbindung der vier als Sekundärplatinen ausgebildeten Platinen 26, 30, 32, 34 an die erste Platine 24 beliebig. Jede der vier als Sekundärplatinen ausgebildeten Platinen 26, 30, 32, 34 kann an jeden beliebigen Steckadapter 28, 36, 38, 40 der ersten Platine 24 angebunden werden und ist voll funktionsfähig. Dabei ist es für eine Funktion des Schnittstellenschaltkreises 14 und der Funktionsschaltkreise 16, 18, 20, 22 unerheblich, ob ein anderer Funktionsschaltkreis 16, 18, 20, 22 an die Schaltkreisvorrichtung 12 angekoppelt ist. Sind beispielsweise lediglich die zweite Platine 26 und die dritte Platine 30 an die erste Platine 24 angebunden, so sind der erste Funktionsschaltkreis 16 der zweiten Platine 26 und der zweite Funktionsschaltkreis 18 der dritten Platine 30 voll funktionsfähig. Dabei ist es auch denkbar, dass lediglich eine als Sekundärplatine ausgebildete Platine 26, 30, 32, 34 an die erste, als Hauptplatine ausgebildete Platine 24 angeschlossen ist. Auch hier wäre die eine angeschlossene Platine 26, 30, 32, 34 voll funktionsfähig. Grundsätzlich ist es auch denkbar, dass die erste Platine 24 weitere Steckadapter 28, 36, 38, 40 aufweist, die in den Schnittstellenschaltkreis 14 integriert sind, wodurch weitere als Sekundärplatinen ausgebildete Platinen 26, 30, 32, 34 mit einem Funktionsschaltkreis 16, 18, 20, 22 an die Schaltkreisvorrichtung 12 angebunden werden könnten. Dabei ist es denkbar, dass auch anders ausgebildete Funktionsschaltkreise über eine weitere Platine in die Schaltkreisvorrichtung 12 integriert sind. Eine Auswahl der Funktionsschaltkreise 16, 18, 20, 22, die die einzelnen an die erste Platine 24 angebundenen Platinen 26, 30, 32, 34 aufweisen, ist für das vorhergegangene Ausführungsbeispiel lediglich beispielhaft zu sehen. Es ist natürlich auch denkbar, dass eine andere Kombination von Funktionsschaltkreisen 16, 18, 20, 22 durch Anbindung entsprechender Platinen 26, 30, 32, 34 an die erste Platine 24 erreicht wird.

### Bezugszeichen

- 10: Flugzeugsitz
- 12: Schaltkreisvorrichtung
- 14: Schnittstellenschaltkreis
- 16: Funktionsschaltkreis
- 18: Funktionsschaltkreis
- 20: Funktionsschaltkreis
- 22: Funktionsschaltkreis
- 24: erste Platine
- 26: zweite Platine
- 28: Steckadapter
- 30: dritte Platine
- 32: vierte Platine
- 34: fünfte Platine
- 36: Steckadapter
- 38: Steckadapter
- 40: Steckadapter
- 42: Steckadapter
- 44: Steckadapter
- 46: Steckadapter
- 48: Steckadapter
- 50: Flugzeugsteuereinheit
- 52: Steckerelement
- 54: Steckerelement
- 56: Steckerelement
- 58: Steckerelement
- 60: Hauptstecker
- 62: Flugzeugelektronik
- 64: Gehäuse

## Patentansprüche

1. Flugzeugsitz mit einer Flugzeugsitzsteuereinheit, die zumindest zur teilweisen Steuerung des Flugzeugsitzes (10) vorgesehen ist, mit zumindest einer Schaltkreisvorrichtung (12), die zumindest einen Schnittstellenschaltkreis (14) und zumindest einen Funktionsschaltkreis (16, 18, 20, 22) aufweist, und die zumindest eine erste Platine (24), die den Schnittstellenschaltkreis (14) aufweist, und zumindest eine zweite Platine (26) aufweist, die den Funktionsschaltkreis (16) aufweist, wobei die erste Platine (24) und die zweite Platine (26) miteinander gekoppelt sind, und mit zumindest einer weiteren Platine (30, 32, 34), die den Funktionsschaltkreis (18, 20, 22) aufweist und zur Anbindung an der ersten Platine (24) vorgesehen ist, wobei die zweite Platine (26) und/oder die weitere Platine (30, 32, 34) jeweils ein Steckerelement (52, 54, 56, 58) aufweisen, das zur Anbindung einer externen Elektronik an die Schaltkreisvorrichtung (12) vorgesehen ist und die erste Platine (24) einen Hauptstecker (60) umfasst, der zur Anbindung der Schaltkreisvorrichtung (12) an eine Flugzeugelektronik (62) vorgesehen ist, **dadurch gekennzeichnet, dass** die Flugzeugsitzsteuereinheit über ein Gehäuse (64) in dem Flugzeugsitz (10) befestigt ist.

2. Flugzeugsitz nach Anspruch 1, **dadurch gekennzeichnet, dass** die erste Platine (24) zumindest einen Steckadapter (28) aufweist, der zur Anbindung der zumindest einen zweiten Platine (26) vorgesehen ist.

3. Flugzeugsitz nach Anspruch 2, **dadurch gekennzeichnet, dass** die erste Platine (24) zumindest einen weiteren Steckadapter (36, 38, 40) aufweist, der zur Anbindung der weiteren Platine (30, 32, 34) vorgesehen ist.

4. Flugzeugsitz nach Anspruch 2 oder Anspruch 3, **dadurch gekennzeichnet, dass** die einen Funktionsschaltkreis (16, 18, 20, 22) aufweisende Platine (26, 30, 32, 34) einen Steckadapter (42, 44, 46, 48) aufweist, der äquivalent zu den Steckadaptern (28, 36, 38, 40) der ersten Platine (24) ausgebildet ist.

5. Flugzeugsitz zumindest nach einem der vorhergehenden Ansprüche **dadurch gekennzeichnet, dass** der Schnittstellenschaltkreis (14) zur Kommunikation der Schaltkreisvorrichtung (12) mit einer Flugzeugsteuereinheit (50) vorgesehen ist.

6. Flugzeugsitz nach einem der vorhergehenden Ansprüche, **dadurch gekennzeichnet, dass** der Funktionsschaltkreis (22) als ein Serviceschaltkreis ausgebildet ist.

7. Flugzeugsitz nach einem der vorhergehenden Ansprüche, **dadurch gekennzeichnet, dass** der Funktionsschaltkreis (16) als ein Sitzplatzsteuerungsschaltkreis ausgebildet ist.

8. Flugzeugsitz nach einem der vorhergehenden Ansprüche, **dadurch gekennzeichnet, dass** der Funktionsschaltkreis (18) als ein Lichtsteuerschaltkreis ausgebildet ist.

9. Flugzeugsitz nach einem der vorhergehenden Ansprüche, **dadurch gekennzeichnet, dass** der Funktionsschaltkreis (20) als ein Sensor- und/oder Aktuatorschnittstellenschaltkreis ausgebildet ist.

10. Flugzeugsitz nach einem der vorhergehenden Ansprüche, **dadurch gekennzeichnet, dass** der Schnittstellenschaltkreis (14) zur Energieversorgung der Schaltkreisvorrichtung (12) und zur Kommunikation zwischen den Funktionsschaltkreisen (16, 18, 20, 22) vorgesehen ist.

11. Flugzeugsitz nach einem der vorhergehenden Ansprüche, **dadurch gekennzeichnet, dass** die erste Platine (24) als eine Hauptplatine und die zweite Platine (26) als eine Sekundärplatine ausgebildet ist.

## Claims

1. Aircraft seat with an aircraft seat control unit that is configured at least for a partial controlling of the aircraft seat (10), with at least one circuit device (12) including at least one interface circuit (14) and at least one functional circuit (16, 18, 20, 22) and including at least one first printed circuit board (24) that comprises the interface circuit (14) and at least one second printed circuit board (26) that comprises the functional circuit (16), wherein the first printed circuit board (24) and the second printed circuit board (26) are coupled with one another, and with at least one further printed circuit board (30, 32, 34) that comprises the functional circuit (18, 20, 22) and is configured for a connection to the first printed circuit board (24), wherein the second printed circuit board (26) and/or the further printed circuit board (30, 32, 34) each have a plug element (52, 54, 56, 58), which is configured for a connection of an external electronics unit to the circuit device (12), and the first printed circuit board (24) comprises a main plug (60), which is configured for a connection of the circuit device (12) to an aircraft electronics unit (62), **characterised in that** the aircraft seat control unit is fixated in the aircraft seat (10) via a housing (64).

2. Aircraft seat according to claim 1,
**characterised in that** the first printed circuit board (24) comprises at least one plug adapter (28) that is configured for a connection of the at least one second printed circuit board (26).

3. Aircraft seat according to claim 2,
**characterised in that** the first printed circuit board (24) comprises at least one further plug adapter (36, 38, 40) that is configured for a connection of the further printed circuit board (30, 32, 34).

4. Aircraft seat according to claim 2 or 3,
**characterised in that** the printed circuit board (26, 30, 32, 34) having a functional circuit (16, 18, 20, 22) comprises a plug adapter (42, 44, 46, 48), which is implemented in a manner equivalent to the plug adapters (28, 36, 38, 40) of the first printed circuit board (24).

5. Aircraft seat according to one of the preceding claims,
**characterised in that** the interface circuit (14) is configured for a communication of the circuit device (12) with an aircraft control unit (50).

6. Aircraft seat according to one of the preceding claims,
**characterised in that** the functional circuit (22) is embodied as a service circuit.

7. Aircraft seat according to one of the preceding claims,
**characterised in that** the functional circuit (16) is embodied as a seating control circuit.

8. Aircraft seat according to one of the preceding claims,
**characterised in that** the functional circuit (18) is embodied as a light control circuit.

9. Aircraft seat according to one of the preceding claims,
**characterised in that** the functional circuit (20) is embodied as a sensor circuit and/or actuator interface circuit.

10. Aircraft seat according to one of the preceding claims,
**characterised in that** the interface circuit (14) is configured for an energy supply of the circuit device (12) and for a communication between the functional circuits (16, 18, 18, 20).

11. Aircraft seat according to one of the preceding claims,
**characterised in that** the first printed circuit board (24) is embodied as a main printed circuit board and the second printed circuit board (26) is embodied as a secondary printed circuit board.

## Revendications

1. Siège d'aéronef avec une unité de commande de siège d'aéronef prévue pour une au moins partielle commande du siège d'aéronef (10), avec au moins un dispositif de circuit commutateur (12) ayant au moins un circuit interface (14) et au moins un circuit fonctionnel (16, 18, 20, 22) et ayant au moins un premier circuit imprimé (24), qui comporte le circuit interface (14), et au moins un deuxième circuit imprimé (26), qui comporte le circuit fonctionnel (16), le premier circuit imprimé (24) et le deuxième circuit imprimé (26) étant couplés l'un avec l'autre,
et avec au moins un autre circuit imprimé (30, 32, 34), qui comporte le circuit fonctionnel (18, 20, 22) et est prévu pour un raccordement au premier circuit imprimé (24), le deuxième circuit imprimé (26) et/ou l'autre circuit imprimé (30, 32, 34) comportant respectivement un élément fiche mâle (52, 54, 56, 58) prévu pour un raccordement d'une unité électronique externe au dispositif de circuit commutateur (12) et le premier circuit imprimé (24) comportant une fiche mâle principale (60) prévue pour un raccordement du dispositif de circuit commutateur (12) à une électronique d'aéronef (62),
**caractérisé en ce que** l'unité de commande de siège d'aéronef est fixée dans le siège d'aéronef (10) par un boîtier (64).

2. Siège d'aéronef selon la revendication 1,
**caractérisé en ce que** le premier circuit imprimé (24) comporte au moins un adaptateur de fiche (28), qui est prévu pour un raccordement de l'au moins un deuxième circuit imprimé (26).

3. Siège d'aéronef selon la revendication 2,
**caractérisé en ce que** le premier circuit imprimé (24) comporte au moins un autre adaptateur de fiche (36, 38, 40), qui est prévu pour un raccordement de l'autre circuit imprimé (30, 32, 34).

4. Siège d'aéronef selon l'une quelconque des revendications 2 ou 3,
**caractérisé en ce que** le circuit imprimé (26, 30, 32, 34) comprenant un circuit fonctionnel (16, 18, 20, 22) comporte un adaptateur de fiche (42, 44, 46, 48) implémenté d'une manière équivalente aux adaptateurs de fiche (28, 36, 38, 40) du premier circuit imprimé (24).

5. Siège d'aéronef au moins selon l'une quelconque des revendications précédentes,
**caractérisé en ce que** le circuit interface (14) est prévu pour une communication du dispositif de circuit commutateur (12) avec une unité de commande d'aéronef (50).

6. Siège d'aéronef selon l'une quelconque des revendications précédentes,
**caractérisé en ce que** le circuit fonctionnel (22) est réalisé comme circuit de service.

7. Siège d'aéronef selon l'une quelconque des revendications précédentes,
**caractérisé en ce que** le circuit fonctionnel (16) est réalisé comme circuit de commande de place assise.

8. Siège d'aéronef selon l'une quelconque des revendications précédentes,
**caractérisé en ce que** le circuit fonctionnel (18) est réalisé comme circuit de commande de lumière.

9. Siège d'aéronef selon l'une quelconque des revendications précédentes,
**caractérisé en ce que** le circuit fonctionnel (20) est réalisé comme circuit capteur et/ou circuit d'interface actionneur.

10. Siège d'aéronef selon l'une quelconque des revendications précédentes,
**caractérisé en ce que** le circuit interface (14) est prévu pour un approvisionnement en énergie du dispositif de circuit commutateur (12) et pour une communication entre les circuits fonctionnels (16, 18, 20, 22).

11. Siège d'aéronef selon l'une quelconque des revendications précédentes,
**caractérisé en ce que** le premier circuit imprimé (24) est réalisé comme circuit imprimé principal et le deuxième circuit imprimé (26) et réalisé comme circuit imprimé secondaire.
